# EUROPEAN PATENT APPLICATION

(11) **EP 2 138 648 A2**
(43) Date of publication of application: **30.12.2009**
(21) Application number: 09161895.9
(22) Date of filing: 04.06.2009
(51) Int. Cl.: E04F 11/18, F16B 2/14

(54) **Clamp device and arrangement**

(30) Priority: 25.06.2008 FI 20085637
(71) Applicant: Oy Steelpro Ltd, 01800 Klaukkala (FI)
(72) Inventor: JÄRVINEN, Kalevi, FI-01800, Klaukkala (FI); RAHIKKA, Jouko, FI-00180, Klaukkala (FI)
(74) Representative: Tanhua, Pekka Vilhelm

(57) **Abstract**

The invention relates to a fastening device. According to the invention, the fastening device (1) comprises two elements, a first element (2) and a second element (3), both of said elements comprising, as a first surface, a stepped surface (21, 31), provided with a number of successive steps in the lengthwise direction (B-B) of the fastening device. Each step of said surfaces is provided with a straight landing (21a, 31a) arranged at an inclined angle (α) with respect to the lengthwise direction (B-B). The purpose of the first and second elements (2, 3) is to arrange the stepped surfaces (21, 31), particularly the landings (21a, 31a) of the steps, in facing positions, so that in the lengthwise direction (B-B), the elements are movable with respect to each other, in which case the total thickness (p) of the elements is changed, and said change in the thickness is utilized for fastening an object by pressing it in a groove or in a corresponding recess, and respectively for disengaging it. The invention also relates to a fastening arrangement for fastening an object in a groove or in a corresponding recess, where said fastening device is made use of.

## Description

The invention relates to a fastening device according to the preamble of claim 1.

The invention also relates to a fastening arrangement according to the preamble of claim 9.

In the prior art, there are known fastening devices for example from the US patent publication US-2,954,638, comprising a wedge element, by means of which for example a glass plate is wedged in a groove provided in a frame. Now that inner wall of the groove, against which the wedge element is arranged, is inclined, and its angle of inclination corresponds to the tip angle left in between the sides of the wedge element.

In the prior art there is known, from the European patent application EP-1277894, a railing arrangement where the fastening device comprises two wedge elements with equally large tip angles, said wedge elements being arranged in opposite directions, so that they are pressed against each other on one side. By moving the first wedge element towards the second wedge element, the total thickness of the wedge elements can be increased, and this feature is utilized for locking the glass railing in the groove of the support structure.

In the prior art, there is known, from the European patent application EP-1818476, a railing system where a glass plate is fastened to a groove provided in a U-beam by means of a wedge. The inner surface of the groove provided in the U-beam comprises two successive, stepwise arranged parallel straight surfaces, against which the wedge is arranged to be supported in a fastening situation, at the respectively arranged support surfaces, at the same time as the other straight surface of the wedge presses the glass plate against the second inner surface of the groove.

A drawback with the known fastening devices and arrangements is, among others, the fact that the wedge element and/or groove or the like, in connection with which the wedge elements are applied, is asymmetrical in shape. This in turn results in that the manufacturing and/or implementation thereof is cumbersome. In addition, the tip angle of the wedge element is often relatively small, in which case there is needed a large motional distance in the lengthwise direction of the wedge, in order to realize the desired change in the width or thickness required by the fastening operation. This may also result in an unnecessary increase of the groove depth. Another drawback is that a large maximum thickness is often required of the wedge elements, in which case also the groove width must be relatively large. Yet another drawback is an uneven distribution of the compressive force of the wedge element, particularly in case there are irregularities or angle differences in the side surface of the wedge and/or in the inner surface of the groove.

The object of the invention is to eliminate the drawbacks connected to the above described fastening devices and arrangements. Another object of the invention is to realize a new, improved fastening device and arrangement, by which particularly an even, regular change in the wedge element thickness is utilized when fastening a target object, by pressing it in a groove or a corresponding recess.

The fastening device according to the invention is characterized by what is set forth in claim 1. The fastening arrangement according to the invention is characterized by what is set forth in claim 9. The dependent claims describe preferred embodiments of the invention.

The invention relates to a fastening device. According to the invention, the fastening device comprises two elements, a first element and a second element, both of said elements including, as a first surface, a stepped surface provided with a number of successive steps in the lengthwise direction of the fastening device, where each step is provided with a straight landing arranged at an inclined angle with respect to the lengthwise direction; and where the purpose of said first and second elements is to arrange the stepped surfaces, particularly the step landings, in facing positions, so that the elements are in the lengthwise direction movable with respect to each other, in which case the total thickness of the elements is changed, and said change in the thickness is utilized for fastening an object by pressing it in a groove or in a corresponding recess, and respectively for disengaging it.

The invention also relates to a fastening arrangement for fastening an object in a groove or in a corresponding recess. According to the invention, the fastening arrangement comprises a fastening device according to any of the claims, which fastening device is fitted in a groove or in a corresponding recess together with an object or an element belonging in the object, such as its edge; and said elements of the fastening device are moved with respect to each other in the lengthwise direction, so that the total thickness of the elements is changed, particularly increased while fastening and reduced while disengaging; and by making use of said change in the thickness, the object is fastened in a groove or in a corresponding recess, and respectively disengaged from said groove or recess.

An advantage of the invention is that the structure and shape of the fastening device is simple and clear, in which case also its implementation is straightforward and easy and ensures a reliable fastening of an object.

Another advantage of the invention is that the fastening device is suited to be used particularly with such grooves or recesses that have straight and parallel inner surfaces.

Another advantage of the invention is that the fastening device can be realized as a thin structure, in which case also the groove or recess used in its implementation is narrow in width. Now there can be realized a solid and reliable fastening, also in relatively low grooves or recesses.

Yet another advantage of the invention is that by using the fastening device, there can be realized a compressive force that is distributed evenly along the whole side surface of the fastening device, said compressive force being directed in the object to be fastened, which is fitted in between a groove/recess and the device. This is achieved by facing stepped surfaces resting against each other, said surfaces being preferably arranged, in the lengthwise direction of the fastening device, along the whole area (or at least roughly the whole area) of both elements.

An advantage of the invention is that it is easy to fit in place, particularly when its elements are preferably plate-like in shape and together form a flat plate or the like.

Yet another advantage of the invention is that both fastening and disengaging by means of the fastening device is simple and effective, particularly when the moving of the elements with respect to each other is realized by means of one or several screws.

The invention and its further advantages are described in more detail with reference to the appended drawings, where
- Figure 1: is a cross-sectional illustration of a fastening device according to the invention, shown in the rest position;
- Figure 2: illustrates the first element of the fastening device, when viewed towards the stepped surface;
- Figure 3: illustrates the second element of the fastening device, when viewed towards the stepped surface;
- Figure 4: is a side-view illustration of a fastening device according to the invention, seen in the working position, and
- Figure 5: illustrates a fastening arrangement according to the invention, in which said fastening device is implemented.

Like numbers for like parts are used in the drawings.

An advantageous fastening device 1 according to the invention is illustrated in Figures 1, 2 and 3. The fastening device 1 comprises two elements, i.e. a first element 2 and a second element 3. When viewed at the front, the fastening device 1 and its elements 2, 3 are advantageously rectangular or even square-shaped, or modifications of these shapes. In some embodiments, the width k of the fastening device 1 is larger than its length h. The measures of the fastening device 1 vary according to the embodiment in question, which means that its width k may also be clearly smaller than its length h. The measures of the fastening device depend for example on the groove in question, or in general on the recess and the object that should be fastened or locked in said recess.

In a preferred embodiment of the invention, the elements 2, 3 of the fastening device 1 are plate-like elements. The fastening device is advantageously flat, i.e. its diameter or thickness p is clearly smaller than its other measures, i.e. its width k and length h.

Both elements 2, 3 of the fastening device 1 comprise a stepped surface 21, 31, which is formed of a number of successive steps 210, 310, when viewed in the lengthwise direction B-B of the fastening device and also of the elements. The stepped surface 21, 31 forms the first surface of both elements 2, 3. The defined lengthwise direction B-B is also the motional and functional direction of the fastening device 1 and its elements 2, 3. Each step 210, 310 has a straight landing 21 a, 31a arranged at an inclined angle α with respect to the lengthwise direction B-B. Moreover, in both elements 2, 3 the landings 21a, 31 a are arranged at the same angle α with respect to the lengthwise direction B-B. The step landings 21a, 31 a are connected by a rise 21 b of the first stepped surface, and respectively by a rise 31 b of the second stepped surface.

The stepped surfaces 21, 31 of the first and second elements 2, 3 of the fastening device 1, and particularly the step landings 21a, 31a, are arranged at facing positions, at least when the fastening device should be installed and used.

The stepped surfaces 21, 31 of both elements 2, 3 of the fastening device 1 are arranged to extend preferably along the whole area of the facing surfaces of both elements, or at least along the major part of said area, such as 90% of the area.

In the installation step of the fastening device 1, the elements 2, 3 are in the lengthwise direction B-B movable with respect to each other, in which case particularly the step landings 21 a, 31 a are slidably supported against each other. When the elements 2, 3 are moved for the transfer distance s in the lengthwise direction B-B, the total diameter of the elements 2, 3, i.e. the thickness p of the fastening device is changed (cf. Figure 4), and this change in the thickness Δp is utilized for fastening an object (or its desired element) by pressing it in a groove or suitable recess and respectively for disengaging it. While fastening (or locking) an object, the thickness p of the device 1, i.e. its rest thickness, is increased to its fastening thickness p + Δp, and respectively while disengaging (or releasing) the object, the fastening thickness p + Δp is reduced (p + Δp) - Δp) back to the rest thickness p or at least near to it. The desired thickness change Δp of the elements 2, 3 that can be determined in advance depends particularly on the mutual transfer distance s of the elements 2, 3, on the length of the landings 21a, 31a and on the angle α.

In a preferred embodiment of the invention, the second surface 22, 32 of both elements 2, 3 of the fastening device 1 is a straight planar surface, which is preferably arranged to coincide with the lengthwise direction B-B, in which case said surfaces are advantageously parallel planar surfaces. The outer surfaces of the fastening device 1 are formed of said second surfaces 22, 32. Now the fastening device 1 can be fitted, for fastening and locking an object, in a groove or in a corresponding recess, the inner surfaces of which are straight and parallel. The main direction of the first surfaces of the elements 2, 3 of the fastening device 1, i.e. the stepped surfaces 21, 31, is advantageously coincided with the lengthwise direction B-B, and in this embodiment it is the same as that of the second surfaces 22, 23, i.e. the outer surfaces of the fastening device. In this connection, the main direction of the stepped surfaces 21, 31 refers to the direction of an essentially planar surface that is imagined to pass through the points of incidence of the step landings 21a, 31a and the points of incidence of the rises 21 b, 31 b, preferably their lines of incidence.

In a preferred embodiment of the invention, the angle α, i.e. the angle of inclination of the step landings 21a, 31a of the stepped surfaces 21, 31 of the fastening device 1 is advantageously within the range 5-20 degrees, preferably 10-15 degrees.

In a preferred embodiment of the invention, the step landings 21a, 31a of the stepped surfaces 21, 31 of the fastening device 1 are essentially identical in length and advantageously at least 30%, but preferably within the range 10-20%, of the length h of the element 2, 3. The number of the steps and stepped surfaces 21, 31 of the fastening device 1 is preferably within the range 3-5, but their number may be even larger.

The fastening device 1 according to the invention comprises mechanical transfer elements arranged in between the elements 2, 3, by which said elements are movable with respect to each other in the lengthwise direction B-B. The mechanical transfer elements are advantageously realized by means of one or several, such as two, screw elements 4; 41, 42.

It is advantageous that the edge element 23 (or end element when viewed in the lengthwise direction B-B) of one of the elements of the fastening device 1, such as the first element 2, is formed as an extension that advantageously extends along the whole width h of the elements 2, 3 of the fastening device 1, and corresponds in thickness to the total summed-up thickness p of the elements. The length of the edge element 23 in the direction B-B is for example 1/5 or less of the whole length h of the fastening device. The edge element 23 is provided with holes 5; 51, 52 for screw elements 4; 41, 42. The holes 5; 51, 52 are advantageously spaced apart. The holes 5; 51, 52 are preferably provided with threadings that match the screw elements 4; 41, 45. The screw elements 4; 42, 43 are arranged to extend through the hole 5; 51, 52 arranged in the edge element 23 to the edge element 33 of the second element 3, so that by winding the screw element, the elements 2, 3 are movable with respect to each other.

With respect to the lengthwise direction B-B, the holes 5; 51, 52 provided for the screw elements 4; 41, 42 are advantageously arranged at the same angle α as the landings 21a, 31a of the steps 210, 310. In addition, the inner surface 23a of the edge element 23 of the first element 2 is advantageously arranged at right angles to the lengthwise direction of the hole 5; 51, 52 and to the central axis. Respectively, the outer surface 33a of the edge element 33 of the second element is at least roughly parallel with the inner surface 23a of the edge element 23 of the first element 2. Consequently, now the inner surface 23a of the edge element 23 of the first element 2 and the outer surface 33a of the edge element 33 of the second element rest against each other in the rest position of the fastening device 1, at the same time as the corresponding stepped surfaces 21, 31 are pressed tightly together, and the thickness p of the fastening device 1 is at its minimum, i.e. at the rest thickness.

The above described fastening device 1 according to the invention functions as follows. The fastening device 1 is arranged in a groove, recess or the like, together with the object to be fastened (or with an element of said object). Now the fastening device 1 and particularly its elements 1, 2 are in the basic or rest position, and the thickness p of the fastening device is at its minimum. When the screw elements 4; 42, 43 are wound in holes 5; 51, 52 of the edge element 23 of the first element 2 inwards, towards the edge element 33 of the second element 3, they shift and push the second element 3, supported and guided by the stepped surfaces 21, 31, with respect to the first element 2, so that the distance between the elements 1, 2 of the fastening device 1, i.e. the transfer distance s in the lengthwise direction B - B, and at the same time the thickness p of the fastening device, are increased. Now the fastening device 1 is set in the working position, where it compresses the object to be fastened in place in a groove or the like. When the screw elements 4; 42, 43 are wound in the holes 5; 51, 52 of the edge element 23 of the first element 2 of the fastening device 1 outwards and away from the edge element 33 of the second element 3, it releases the second element 3 to move back towards the rest position, in which case the thickness p of the fastening device 1 is reduced, and it is returned to the minimum value, i.e. to the initial value. Now the object to be fastened is released from the compression of the fastening device 1, and it can be disengaged from the groove or the like.

In a preferred embodiment of the invention, the end of the screw element 4; 41, 42 is rotatably attached to the edge element 33 of the second element 3, such as a hole 8; 81, 82 provided therein. Now the screw element 4; 41, 42 also shifts and pulls the second element 3 from the working position back to the rest position, as supported by the stepped surfaces 21, 31.

A fastening arrangement according to the invention for fastening an object in a groove 6 or in a corresponding recess comprises a fastening device 1 of the type described above and particularly defined in the claims. The object to be fastened is a plate-like element, for instance a glass plate 7 or a corresponding plate-like object, or an object provided with a plate-like edge or protrusion. In this connection we refer to Figure 5. The fastening device 1 is fitted in a groove 6 together with an element belonging to the object, such as the edge element 71 of the plate 7. The thickness p of the fastening device 1 must be suitable, so that the edge element 71 of the plate 7 also fits in the groove 6 with a suitable clearing. Thereafter the elements 2, 3 of the fastening device 1 are shifted, with respect to each other, in the lengthwise direction B-B, for a suitable transfer distance s. The moving of the elements 2, 3 is realized preferably for example by screw elements 4; 41, 42 or by other corresponding mechanical transfer devices. When the elements 2; 3 are moved, the total summed-up thickness p of the elements also changes; particularly while fastening, it is increased from the rest thickness, and while disengaging, it is reduced back to the rest thickness, and by making use of said change in the thickness, the object to be fastened, such as said plate 7, is fastened and respectively disengaged from the groove 6.

For fastening a glass plate 7 or a corresponding plate-like object, there are advantageously used several fastening devices 1 according to the invention. Now they are fitted in a groove 6, at a suitable distance from each other, along the edge element 71 of the plate 7. By means of the fastening devices 1, the plate 7 is compressed tightly in place in the groove 6, which is arranged for instance in a beam or the like permanently fixed with suitable structures.

The invention is not restricted to the above described embodiment only, but many modifications are possibly within the scope of the inventive idea defined in the claims.

## Claims

1. A fastening device, **characterized in that** said fastening device (1) comprises two elements, a first element (2) and a second element (3), both of which elements comprise, as a first surface, a stepped surface (21, 31), including a number of successive steps in the lengthwise direction (B-B) of the fastening device, each of said steps having a straight landing (21a, 31a) arranged at an inclined angle (α) with respect to the lengthwise direction (B-B); and that the purpose of said first and second elements (2, 3) is to arrange the stepped surfaces (21, 31), particularly the step landings (21a, 31a), in facing positions, so that the elements are movable with respect to each other in the lengthwise direction (B-B), in which case the total thickness (p) of the elements is changed, and said change in the thickness is utilized for fastening an object by pressing it in a groove or in a corresponding recess, and respectively for disengaging it.

2. A fastening device according to claim 1, **characterized in that** the elements (2, 3) are plate-like elements.

3. A fastening device according to claim 1 or 2, **characterized in that** the stepped surfaces (21, 31) are essentially similar.

4. A fastening device according to claim 1, 2 or 3, **characterized in that** the second surface (22, 32) of each element (2, 3) is a straight planar surface, which is arranged to coincide with the lengthwise direction (B-B).

5. A fastening device according to claim 4, **characterized in that** the main direction of the stepped surfaces (21, 31) of the elements (2, 3) is the same as that of the outer surfaces (22, 32).

6. A fastening device according to any of the preceding claims, **characterized in that** the angle (α) of the landings (21a, 31a) is within the range 5-20 degrees, advantageously 10-15 degrees.

7. A fastening device according to any of the preceding claims, **characterized in that** the landings (21a, 31a) are essentially identical in length and advantageously at least 30%, but preferably within the range 15-30%, of the length (h) of the element (2, 3).

8. A fastening device according to any of the preceding claims, **characterized in that** in between the elements (2, 3), there are arranged mechanical transfer elements, such as one or several screw elements (4; 41, 42), by which the elements are movable with respect to each other in the lengthwise direction (B- B).

9. A fastening device according to claim 8, **characterized in that** the edge element (23) of one element (2) is provided with a screw (4; 41, 42) that extends through the edge element to the edge element (33) of another element (3), so that by winding the screw, the elements are movable with respect to each other.

10. A fastening arrangement for fastening an object (7) in a groove (6) or in a corresponding recess, **characterized in that** said arrangement comprises a fastening device (1) according to any of the preceding claims, which fastening device is fitted in a groove or in a corresponding recess together with an object (7) or an element belonging to said object, such as its edge (71); which elements (2, 3) of the fastening device are moved with respect to each other in the lengthwise direction (B-B), in which case the total thickness (p) of the elements is changed, particularly increased while fastening and reduced while disengaging; and that by utilizing said change in thickness, the object is fastened in a groove or in a corresponding recess and respectively disengaged from said groove or recess.
